# FASCICULE DE BREVET EUROPEEN

(11) **EP 4 623 686 B1**
(45) Date de publication et mention de la délivrance du brevet: **07.10.2026**
(21) Numéro de dépôt: 25162580.2
(22) Date de dépôt: 10.03.2025
(51) Int. Cl.: A01M 7/00, B05B 15/50, B05B 12/00, B05B 1/20, B05B 15/658

(54) **SYSTÈME DE PULVÉRISATION COMPRENANT UN PORTE-BUSES COMPORTANT UN CAPTEUR DE VIBRATION**
SPRÜHSYSTEM MIT DÜSENHALTER MIT SCHWINGUNGSSENSOR
SPRAYING SYSTEM COMPRISING A NOZZLE HOLDER WITH A VIBRATION SENSOR

(30) Priorité: 25.03.2024 FR 2402971
(43) Date de publication de la demande: 01.10.2025
(73) Titulaire: Exel Industries, 51200 Epernay (FR)
(72) Inventeur: PITAUD, Sylvain, 01990 Chaneins (FR)
(74) Mandataire: Bandpay & Greuter

(56) Documents cités:
- EP-A1- 3 959 979
- US-A1- 2005 000 277
- US-A1- 2006 265 106
- US-A1- 2014 263 709
- US-B2- 10 219 506

## Description

### DOMAINE TECHNIQUE

La présente invention concerne le domaine des systèmes de pulvérisation agricoles. Plus précisément, l'invention concerne une rampe de pulvérisation, comportant au moins une buse de pulvérisation et un capteur de vibration mesurant la vibration d'un fluide traversant ladite buse.

### ETAT DE LA TECHNIQUE

Une rampe de pulvérisation agricole comprend généralement des portes-buses répartis de manière uniforme sur toute la longueur de la rampe de pulvérisation, pour pulvériser du produit phytosanitaire sur des rangs de végétaux, sous forme liquide ou d'engrais liquide par exemples. En particulier, une telle rampe de pulvérisation connue est conçue pour pulvériser du liquide sur le champ.

Comme cela est connu, une rampe de pulvérisation comporte ainsi une pluralité de buses espacées les unes des autres, ledit espacement étant fixe et les buses permettant un double voire un triple recouvrement de la surface pulvérisée par le liquide. Une rampe de pulvérisation connue permet une pulvérisation de l'ensemble du champ, plutôt qu'une pulvérisation en ligne.

Le produit phytosanitaire pulvérisé présente une certaine viscosité ainsi qu'un amas de dépôt en suspension lors de la pulvérisation. Ainsi, les buses de pulvérisation peuvent, au cours de la pulvérisation s'obstruer totalement ou en partie, empêchant la pulvérisation, ou du moins son homogénéité, en empêchant la pulvérisation de certaines zones des rangs de végétaux ou en induisant une pulvérisation restreinte.

Par ailleurs, le risque d'obstruction au moins partielle des buses de pulvérisation engendre un stress conséquent pour l'utilisateur qui doit vérifier tout au long de la pulvérisation le bon fonctionnement des buses de pulvérisation afin de garantir une bonne pulvérisation, notamment en se retournant fréquemment pour observer l'état de pulvérisation des buses afin de détecter rapidement une éventuelle buse de pulvérisation obstruée. US 2006/265106 A1 illustre un tel système connu dans l'état de la technique.

L'invention vise à résoudre les inconvénients de l'état de la technique susmentionnés, notamment en proposant une rampe de pulvérisation comprenant au moins un porte-buses permettant de mesurer l'état des buses, c'est-à-dire si elles pulvérisent correctement ou si elles sont obstruées, au moins partiellement, et prévenir l'utilisateur lorsque tel est le cas.

### PRESENTATION DE L'INVENTION

Plus précisément, l'invention a pour objet un système de pulvérisation pour pulvérisateur agricole, comportant une rampe de pulvérisation ayant un conduit principal et au moins un porte-buses relié au conduit principal. Le porte-buses comporte un corps logeant une conduite d'admission de produit à pulvériser configurée pour être alimentée en produit à pulvériser par ledit conduit principal. Le porte-buses comporte au moins une première buse de pulvérisation dudit produit comportant au moins un orifice de sortie dudit produit et configurée pour être alimentée en produit par la conduite d'admission de produit et pour acheminer ledit produit vers ledit orifice de sortie. Le porte-buses comporte au moins un capteur de vibration logé dans ledit corps ou relié à ladite première buse. Le système de pulvérisation comporte également un dispositif d'amplification de vibration situé en amont de l'orifice de sortie de la buse de pulvérisation, ledit dispositif d'amplification étant configuré pour amplifier les vibrations du corps ou de la buse. Ladite rampe de pulvérisation est configurée pour pulvériser du produit par ladite première buse de pulvérisation, ledit capteur de vibration étant configuré pour mesurer les vibrations du corps. Ledit système de pulvérisation comporte en outre une unité de calcul configurée pour comparer la mesure des vibrations du corps ou de la première buse à un signal de référence pour déterminer l'état d'obstruction de ladite buse.

Le produit à pulvériser est acheminé du conduit principal, vers l'orifice de sortie de la buse en passant par la conduite d'admission du porte-buse. Lorsque la buse de pulvérisation qui pulvérise le produit est partiellement obstruée, des perturbations sont générées dans le flux de produit, entrainant des vibrations dans le corps du porte-buses. Le capteur de vibration permet alors de mesurer les vibrations générées dans le corps et de les comparer à un signal de référence. Lorsque les vibrations générées sont supérieures au signal de référence, la buse est bouchée, partiellement. Lorsque les vibrations tendent vers zéro, la buse est entièrement bouchée. Le système de pulvérisation permet donc d'informer l'utilisateur de l'état d'obstruction des buses sans avoir à se retourner en permanence vers les buses et de regarder si chaque buse projette correctement le produit phytosanitaire.

Avantageusement, le capteur de vibration est un capteur piézoélectrique.

Avantageusement, le capteur de vibration est logé dans le corps du porte-buses, aux abords de l'orifice de sortie de ladite buse.

Cette localisation au plus proche de l'orifice de sortie des buses permet une mesure la plus précise possible des vibrations du corps et en particulier du bruit généré par la sortie du produit à pulvériser par l'orifice de sortie de la buse.

Avantageusement, le capteur de vibration est en outre configuré pour transformer la mesure des vibrations en signal électrique.

Avantageusement encore, le capteur de vibration est en outre configuré pour transformer le signal électrique en signal différentiel.

Avantageusement encore, ledit capteur de vibration est configuré pour envoyer le signal, le cas échéant différentiel, vers l'unité de calcul qui est configurée pour comparer ledit signal à un signal seuil prédéterminé.

Avantageusement, le porte-buses comporte une pluralité de buses de pulvérisation, le capteur de vibration étant configuré pour mesurer les vibrations du corps de chacune des buses et pour déterminer l'état d'obstruction de chacune des buses.

Avantageusement, le porte-buses comporte une pluralité de buses de pulvérisation, un capteur de vibration étant relié à chacune des buses et étant configuré pour mesurer les vibrations de chacune des buses et déterminer leur état d'obstruction.

De tels dispositifs amplificateur permettent d'augmenter les vibrations du corps lorsque la buse de pulvérisation se bouche. Ainsi, la mesure par le capteur de vibration est plus certaine.

Selon une première variante, le dispositif d'amplification comporte des hélices comprenant des pales configurées pour tourner dans le produit à pulvériser, de sorte à perturber le flux de produit à pulvériser traversant la buse.

Ainsi, le flux de liquide traversant la buse vibre davantage que s'il n'avait pas été perturbé et génère donc plus de vibration et donc de bruit. Le capteur mesure donc des vibrations plus importantes.

Selon une deuxième variante, le dispositif d'amplification comporte des protubérances saillant des parois du corps, en direction du produit à pulvériser qui le traverse et configurées pour perturber ledit produit.

Les protubérances sont configurées pour dévier dans plusieurs directions le produit à pulvériser qui s'écoule et donc à le perturber de sorte à augmenter les vibrations dans le corps et ainsi augmenter le bruit généré.

Avantageusement, le système de pulvérisation comporte en outre un deuxième capteur configuré pour mesurer le bruit environnant du système de pulvérisation, de sorte que la mesure faite par le capteur de vibration puisse être comparée à la mesure faite par ledit deuxième capteur.

Selon un autre aspect de l'invention, celle-ci a trait à un procédé de détection de l'obstruction d'au moins une buse d'un système de pulvérisation tel que précédemment décrit, comportant au moins les étapes suivantes :
- une étape consistant à faire passer du produit à pulvériser par un orifice de ladite buse ;
- une étape consistant à mesurer les vibrations du corps de la buse au moyen d'un capteur de vibration ;
- une étape consistant à transformer la mesure des vibrations en signal électrique ;
- une étape optionnelle consistant à transformer ledit signal électrique amplifié en signal différentiel, au moyen d'une carte intégrée audit capteur de vibration ;
- une étape consistant à transporter ledit signal électrique, le cas échéant transformé en signal différentiel, vers une unité de calcul du système de pulvérisation ;
- une étape consistant à comparer ledit signal électrique, le cas échéant transformé en signal différentiel, transporté à un signal de référence.

Le procédé selon l'invention peut en outre comprendre une étape pour mesurer le bruit environnant, préalablement ou postérieurement à l'étape consistant à faire passer du produit à pulvériser par un orifice de la buse, la mesure du bruit environnant étant filtrée de la mesure des vibrations du corps de la buse.

Avantageusement, une étape consistant à amplifier le signal électrique s'intercale entre ladite étape consistant à transformer la mesure des vibrations en signal électrique et ladite étape consistant à transformer ledit signal électrique amplifié en signal différentiel, au moyen d'une carte intégrée audit capteur de vibration.

Selon un premier mode de réalisation, le signal de référence est une valeur prédéterminée seuil pré-enregistrée dans ladite unité de calcul.

Lorsque le bruit mesuré est supérieur à la valeur prédéterminée seuil, alors la buse est obstruée partiellement. Lorsque le bruit mesuré tend vers zéro, la buse est entièrement obstruée.

Selon un deuxième mode de réalisation, le signal de référence correspond à un signal étalonné seuil au démarrage de ladite au moins une buse de pulvérisation.

Dans ce mode de réalisation, on compare le bruit mesuré par le capteur à un signal étalonné seuil. Lorsque le bruit mesuré est supérieur au signal étalonné seuil, alors la buse est obstruée partiellement. Lorsque le bruit mesuré tend vers zéro, la buse est entièrement obstruée.

Selon un troisième mode de réalisation, lequel la rampe de pulvérisation comporte une pluralité de buses de pulvérisation et dans lequel le signal de référence correspond à une moyenne des signaux électriques, le cas échéant transformés en signaux différentiels, transportés des autres buses de pulvérisation.

Dans ce mode de réalisation, on compare le bruit mesuré par le capteur à une moyenne du bruit généré par les autres buses de la rampe de pulvérisation. Lorsque le bruit mesuré est supérieur à la moyenne des autres buses, alors la buse est obstruée partiellement. Lorsque le bruit mesuré tend vers zéro, la buse est entièrement obstruée.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en perspective d'un porte-buses selon l'invention, comportant un conduit principal auquel est relié le corps du porte-buses comprenant quatre buses de pulvérisation et au moins un capteur de vibration ;
La figure 2 est une représentation schématique de gauche du porte-buses de la figure 1 auquel a été enlevé un couvercle du corps du porte-buses rendant visible la carte électronique du capteur de vibration ; et
La figure 3 est un logigramme illustrant le procédé de détection de l'obstruction d'au moins une buse du porte-buses de la rampe de pulvérisation de la figure 1.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne un système de pulvérisation de produit phytosanitaire pour pulvérisateur agricole. En particulier, le produit à pulvériser se présente sous forme liquide ou d'engrais liquide avec une certaine viscosité. Un amas de dépôt en suspension peut se former lors de la pulvérisation.

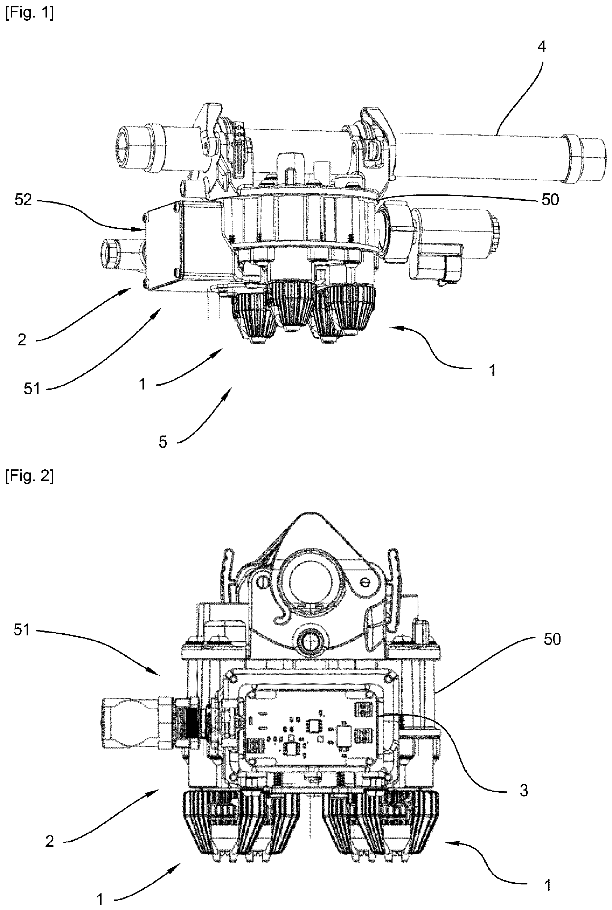

Le système de pulvérisation, tel que représenté sur les figures 1 et 2, comporte une rampe de pulvérisation.

La rampe de pulvérisation est configurée pour pulvériser du produit phytosanitaire sur des rangs de végétation.

La rampe de pulvérisation comporte un conduit principal 4 et au moins un porte-buses 5 relié au conduit principal 4.

Le porte-buses 5 comporte un corps 50 logeant une conduite d'admission du produit phytosanitaire à pulvériser. La conduite d'admission est configurée pour être alimentée en produit par le conduit principal 4.

Le porte-buses 5 comporte en outre au moins une première buse 1, avantageusement une pluralité de buses 1, comportant un orifice de sortie du produit et configuré pour être alimentée en produit par la conduite d'admission de produit et pour l'acheminer vers l'orifice de sortie.

En référence à la figure 1, le porte-buses 5 comporte ici quatre buses 1 de pulvérisation.

Le porte-buses 5 comporte au moins un capteur 2 de vibration. Le capteur 2 de vibration est logé dans le corps 50 du porte-buses 5.

Le porte-buse 5 comportant une pluralité de buses 1 peut comporter un capteur au niveau de chaque orifice de chacune des buses.

Le capteur 2 de vibration comprend au moins une carte électronique 3. La carte électronique 3 est logée dans le corps 50 du porte-buses 5.

Selon une variante non représentée, la carte électronique peut être déportée du corps 50 du porte-buses 5.

En particulier, le corps 50 du porte-buses 5 présente une chambre 51, dont des parois latérales délimitent une ouverture. A travers ladite ouverture est introduit le capteur 2, qui est relié au corps 50. La chambre 51 est fermée par un couvercle 52, visible sur la figure 1. Sur la figure 2, le couvercle 52 a été enlevé, de sorte à rendre visible le capteur 2.

Le capteur 2 est configuré pour mesurer les vibrations du corps 50.

En particulier, le capteur 2, logé dans le corps 50 et plus précisément dans la chambre 51, est situé aux abords de l'orifice de sortie des buses 1 du porte-buse 5.

Selon une variante, le capteur 2 est logé à la jonction entre la rampe de pulvérisation et le porte buse 5 afin de n'avoir qu'un seul capteur 2 pour une pluralité de buses 1.

Cette localisation au plus proche de l'orifice de sortie des buses permet une mesure la plus précise possible des vibrations du corps 50 et en particulier du bruit généré par la sortie du produit à pulvériser par l'orifice de sortie de la buse 1.

Plus les vibrations du corps 50 mesurées sont importantes, plus le bruit généré par la sortie du produit à pulvériser par l'orifice de sortie de la buse 1 l'est aussi.

Lorsque la buse 1 est obstruée, partiellement, les vibrations du corps 50 sont importantes et le bruit généré est également important.

Lorsque la buse 1 est entièrement obstruée, les vibrations du corps 50 cessent, plus aucun bruit n'est alors généré.

Le capteur de vibration 2 peut en outre être configuré pour transformer la mesure des vibrations en signal électrique, le cas échéant pour amplifier ledit signal électrique, et optionnellement pour le transformer en signal différentiel.

Avantageusement, le capteur 2 est un capteur piézoélectrique.

Le système de pulvérisation comporte en outre une unité de calcul configurée pour comparer la mesure des vibrations du corps 50 à un signal de référence pour déterminer l'état d'obstruction de la buse de pulvérisation 1.

Le capteur 2 configuré pour mesurer les vibrations du corps 50 permet au moyen de l'unité de calcul de déterminer l'état d'obstruction de chacune des buses 1 lorsque le porte-buses 5 comporte une pluralité de buses tel que l'exemple représenté sur les figures.

Le capteur 2 de vibration étant configuré pour mesurer les vibrations du corps 50 de chacune des buses 1 et pour déterminer l'état d'obstruction de chacune des buses 1.

En particulier, le capteur 2 de vibration est configuré pour envoyer le signal électrique, le cas échéant transformé en signal différentiel, vers l'unité de calcul, elle-même configurée pour comparer ledit signal différentiel transporté à un signal seuil prédéterminé.

Selon un mode de réalisation de l'invention particulier, le système de pulvérisation comporte en outre un deuxième capteur configuré pour mesurer le bruit environnant du système de pulvérisation. La mesure faite par le capteur de vibration 2 peut alors être comparée à la mesure faite par le deuxième capteur, de sorte à permettre une mesure précise de la vibration du corps 50 du porte-buses 5. En particulier, la mesure du deuxième capteur permet de détecter uniquement les bruits ambiants, et donc de les filtrer de la mesure du premier capteur 2, de sorte à n'avoir que la mesure des vibrations du corps 50. A cette fin, la mesure du bruit environnant est par exemple déduite de la mesure des vibrations du corps 50 de chacune des buses 1. Selon un mode de réalisation, dans ce cas, la mesure effectuée par le deuxième capteur peut être effectuée avant même le démarrage du système de pulvérisation, c'est-à-dire avant que du produit à pulvériser ne passe par l'orifice de la buse 1 ou des buses 1.

Le deuxième capteur est disposé sur le système de pulvérisation, notamment sur la rampe de pulvérisation, en particulier en un lieu éloigné du premier capteur, de sorte à capter les bruits environnant de la rampe de pulvérisation, tel que le bruit du moteur de l'engin agricole par exemple, mais sans pour autant capter les bruits générés par la pulvérisation du produit phytosanitaire par les buses de pulvérisation.

Avantageusement, le deuxième capteur est un capteur piézoélectrique.

Par exemple, le deuxième capteur est configuré pour mesurer le signal correspondant au bruit généré par une bobine PWM commandant l'ouverture et la fermeture des buses 1 et/ou pour mesurer le signal correspondant au bruit généré par un dispositif de motorisation d'un porte-buses multi-buses portant un ensemble de buses 1.

Selon l'invention, le système de pulvérisation comporte un dispositif d'amplification de bruit. Le dispositif d'amplification de vibration est configuré pour amplifier les vibrations du corps 50 et en particulier le bruit généré par la sortie du produit à pulvériser par l'orifice de sortie de la buse 1.

Le dispositif d'amplification est disposé dans le corps 50 du porte-buses 5. En particulier, le dispositif d'amplification est situé en amont de l'orifice de sortie de la buse 1.

Il peut, selon une variante, être disposé à la jonction entre la rampe de pulvérisation et le porte-buses 5 afin de n'avoir qu'un dispositif amplificateur pour une pluralité de buses 1.

Le dispositif d'amplification peut par exemple comporter des hélices dont les pales sont configurées pour tourner dans le produit à pulvériser, de sorte à perturber le flux de liquide traversant la buse 1. Ainsi, le liquide traversant la buse 1 vibre davantage que s'il n'avait pas été perturbé et génère donc plus de bruit. Le capteur 2 mesure donc des vibrations plus importantes.

Le dispositif d'amplification peut également comporter des hélices dont au moins une portion des pales est hélicoïdale. Les pales sont configurées pour tourner dans le produit à pulvériser, de sorte à perturber le flux de liquide traversant la buse 1. Ainsi, le liquide traversant la buse 1 vibre davantage que s'il n'avait pas été perturbé et génère donc plus de bruit. Le capteur 2 mesure donc des vibrations plus importantes.

Le dispositif d'amplification peut également comporter des protubérances saillant des parois du corps 50, en direction du produit à pulvériser qui le traverse. Les protubérances sont configurées pour dévier dans plusieurs directions le produit qui s'écoule et donc à le perturber de sorte à augmenter les vibrations dans le corps 50 et ainsi augmenter le bruit généré.

Le dispositif d'amplification peut aussi comporter une anche vibrante correspondant à une lamelle configurée pour vibrer, un mélangeur statique, une membrane souple ou tout autre moyen permettant d'obtenir le même effet.

En particulier, de tels dispositifs amplificateur permettent d'augmenter les vibrations du corps 50 lorsque la buse 1 de pulvérisation se bouche.

L'invention porte également sur un procédé de détection de l'obstruction d'au moins une buse 1 du système de pulvérisation tel que précédemment décrit.

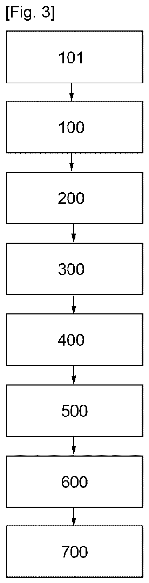

En référence à la figure 3, le procédé de détection comporte une étape 100 consistant à faire passer du produit à pulvériser par l'orifice de sortie de la buse 1.

En particulier, le produit à pulvériser est acheminé dans le conduit principal 4 (figure 1), puis dans le porte-buses 5, à travers le corps 50 du porte-buses 5, en direction de la buse ou des buses 1 de pulvérisation, puis à travers la ou les buses 1 de pulvérisation vers leur orifice de sortie, pour ensuite être pulvériser par l'orifice de sortie vers l'extérieur.

Le procédé comporte ensuite une étape 200 consistant à mesurer les vibrations du corps 50 de la buse 1 ou des buses 1, au moyen du capteur de vibration 2.

Puis, le procédé comporte une étape 300 consistant à transformer la mesure des vibrations du corps 50 de l'étape 200 en signal électrique.

Le procédé comporte ensuite une étape 400 optionnelle consistant à amplifier le signal électrique généré à l'étape 300. Cette étape est mise en oeuvre dans un mode de réalisation préféré du procédé selon l'invention.

Dans le mode de réalisation particulier selon lequel le système de pulvérisation comporte un deuxième capteur pour mesurer le bruit environnant, le procédé de détection peut comporter une étape 101, durant laquelle le deuxième capteur mesure le bruit environnant. Notamment, l'étape 101 peut être mise en oeuvre préalablement à l'étape 100, c'est-à-dire avant même le démarrage du système de pulvérisation, autrement dit avant que du produit à pulvériser ne passe par l'orifice de la buse 1 ou des buses 1. Alternativement, la mesure par le capteur de vibration 2 et la mesure du bruit environnant par le deuxième capteur peuvent par exemple être effectuées en même temps. La mesure du bruit environnant est utilisée pour filtrer le bruit environnant de la mesure effectuée par le capteur de vibration 2. Dans ce cas, le deuxième capteur est disposé de préférence en un point du système de pulvérisation, notamment sur la rampe de pulvérisation, éloigné du capteur de vibration 2.

Une étape optionnelle 500 consiste à transformer ledit signal électrique amplifié en signal différentiel, au moyen de la carte 3 électronique intégrée au capteur de vibration 2. La transformation du signal électrique en signal différentiel permet d'améliorer l'efficacité du procédé. Cette étape est toutefois facultative.

Une étape 600 consiste à transporter le signal électrique, le cas échéant transformé en signal différentiel, vers l'unité de calcul du système de pulvérisation.

Une étape 700 consiste à comparer ledit signal électrique, le cas échéant transformé en signal différentiel, transporté à un signal de référence.

Selon un premier mode de réalisation, le signal de référence est une valeur prédéterminée seuil pré-enregistrée dans ladite unité de calcul.

Dans ce mode de réalisation on compare le bruit mesuré par le capteur 2 à une valeur prédéterminée seuil. Lorsque le bruit mesuré est supérieur à la valeur prédéterminée seuil, alors la buse 1 est obstruée partiellement. Lorsque le bruit mesuré tend vers zéro, la buse 1 est entièrement obstruée.

Selon un deuxième mode de réalisation, le signal de référence correspond à un signal étalonné seuil au démarrage de la buse 1 de pulvérisation.

Dans ce mode de réalisation on compare le bruit mesuré par le capteur 2 à un signal étalonné seuil. Lorsque le bruit mesuré est supérieur au signal étalonné seuil, alors la buse 1 est obstruée partiellement. Lorsque le bruit mesuré tend vers zéro, la buse 1 est entièrement obstruée.

Selon un troisième mode de réalisation, le signal de référence correspond à une moyenne des signaux électriques, le cas échéant transformés en signaux différentiels, transportés des autres buses 1 de pulvérisation.

Dans ce mode de réalisation on compare le bruit mesuré par le capteur 2 à une moyenne du bruit généré par les autres buses 1 de la rampe de pulvérisation. Lorsque le bruit mesuré est supérieur à la moyenne des autres buses, alors la buse 1 est obstruée partiellement. Lorsque le bruit mesuré tend vers zéro, la buse 1 est entièrement obstruée.

Plus généralement, le signal de référence, préenregistré ou non dans le système, peut dépendre de paramètres de pulvérisation, dont la vitesse de déplacement du système de pulvérisation, le débit de produit pulvérisé, ou encore la pression du produit à pulvériser circulant dans la rampe de pulvérisation du système de pulvérisation. Ainsi, l'unité de calcul peut être configurée pour ajuster automatiquement le signal de référence pris en considération, de sorte à l'adapter aux paramètres de pulvérisation ou à l'un des paramètres de pulvérisation. Par exemple, si la vitesse ou le débit de produit pulvérisé ou la pression de produit à pulvériser circulant dans la rampe de pulvérisation du système de pulvérisation évolue, alors le signal de référence évolue de façon correspondante.

Selon l'invention, la détection de l'obstruction d'une buse 1 permet de générer un signal à destination de l'utilisateur afin de l'avertir du bouchage potentiel d'une ou plusieurs buses de pulvérisation. En effet, la suspicion du bouchage d'au moins une buse 1 peut prendre la forme d'un signal sonore ou lumineux par exemple.

On notera par ailleurs que l'invention n'est pas limitée aux modes de réalisation décrit précédemment. Il apparaîtra en effet à l'homme du métier que diverses modifications peuvent être apportées au mode de réalisation décrit ci-dessus, à la lumière de l'enseignement qui vient de lui être divulgué.

## Revendications

1. Système de pulvérisation pour pulvérisateur agricole, comportant une rampe de pulvérisation ayant un conduit principal (4) et au moins un porte-buses (5) relié au conduit principal (4), le porte-buses (5) comportant :
- un corps (50) logeant une conduite d'admission de produit à pulvériser configurée pour être alimentée en produit à pulvériser par ledit conduit principal (4) ;
- au moins une première buse (1) de pulvérisation dudit produit comportant au moins un orifice de sortie dudit produit et configurée pour être alimentée en produit par la conduite d'admission de produit et pour acheminer ledit produit vers ledit orifice de sortie ;
- au moins un capteur (2) de vibration et logé dans ledit corps (50) ou relié à ladite buse (1) ;
ladite rampe de pulvérisation étant configurée pour pulvériser du produit par ladite première buse de pulvérisation (1) ;
ledit capteur (2) de vibration étant configuré pour mesurer les vibrations du corps (50) ; et
ledit système de pulvérisation comportant en outre une unité de calcul configurée pour comparer la mesure des vibrations du corps (50) ou de la buse (1) à un signal de référence pour déterminer l'état d'obstruction de ladite buse (1); **caractérisé en ce que** le système de pulvérisation comporte par ailleurs un dispositif d'amplification de vibration situé en amont de l'orifice de sortie de la buse (1) de pulvérisation, ledit dispositif d'amplification étant configuré pour amplifier les vibrations du corps (50) ou de la buse (1).

2. Système de pulvérisation selon la revendication 1, dans lequel le capteur (2) de vibration est un capteur piézoélectrique.

3. Système de pulvérisation selon l'une des revendications 1 à 2, dans lequel le capteur (2) de vibration est logé dans le corps (50) du porte-buses (5), aux abords de l'orifice de sortie de ladite buse (1).

4. Système de pulvérisation selon l'une quelconque des revendications 1 à 3, dans lequel le capteur de vibration (2) est en outre configuré pour transformer la mesure des vibrations en signal électrique.

5. Système de pulvérisation selon la revendication 4, dans lequel le capteur de vibration (2) est en outre configuré pour transformer le signal électrique en signal différentiel.

6. Système de pulvérisation selon la revendication 5, dans lequel ledit capteur (2) de vibration est configuré pour envoyer le signal différentiel vers l'unité de calcul qui est configurée pour comparer ledit signal différentiel à un signal seuil prédéterminé.

7. Système de pulvérisation selon l'une quelconque des revendications 1 à 6, dans lequel le porte-buses (5) comporte une pluralité de buses (1) de pulvérisation, le capteur (2) de vibration étant configuré pour mesurer les vibrations du corps (50) de chacune des buses (1) et pour déterminer l'état d'obstruction de chacune des buses (1).

8. Système de pulvérisation selon l'une quelconque des revendications 1 à 6, dans lequel le porte-buses (5) comporte une pluralité de buses (1) de pulvérisation, un capteur (2) de vibration étant relié a chacune des buses (1) et étant configuré pour mesurer les vibrations de chacune des buses et déterminer leur état d'obstruction.

9. Système de pulvérisation l'une quelconque des revendications 1 à 8, dans lequel le dispositif d'amplification comporte des hélices comprenant des pales configurées pour tourner dans le produit à pulvériser, de sorte à perturber le flux de produit à pulvériser traversant la buse (1).

10. Système de pulvérisation l'une quelconque des revendications 1 à 8, dans lequel le dispositif d'amplification comporte des protubérances saillant des parois du corps (50), en direction du produit à pulvériser qui le traverse et configurées pour perturber ledit produit.

11. Système de pulvérisation selon l'une des revendications 1 à 10, comportant en outre un deuxième capteur configuré pour mesurer le bruit environnant du système de pulvérisation, de sorte que la mesure faite par le capteur de vibration (2) puisse être comparée à la mesure faite par ledit deuxième capteur.

12. Procédé de détection de l'obstruction d'au moins une buse (1) d'un système de pulvérisation selon l'une des revendications 1 à 11, comportant au moins les étapes suivantes :
- une étape (100) consistant à faire passer du produit à pulvériser par un orifice de ladite buse (1) ;
- une étape (200) consistant à mesurer les vibrations du corps (50) de la buse (1) au moyen d'un capteur de vibration (2) ;
- une étape (300) consistant à transformer la mesure des vibrations en signal électrique ;
- une étape (500), optionnelle, consistant à transformer ledit signal électrique amplifié en signal différentiel, au moyen d'une carte (3) intégrée audit capteur de vibration (2) ;
- une étape (600) consistant à transporter ledit signal électrique, le cas échéant transformé en signal différentiel, vers une unité de calcul du système de pulvérisation ;
- une étape (700) consistant à comparer ledit signal électrique, le cas échéant transformé en signal différentiel, transporté à un signal de référence.

13. Procédé de détection selon la revendication 12, comprenant une étape (101) de mesure du bruit environnant, notamment préalable à l'étape (100) consistant à faire passer du produit à pulvériser par un orifice de ladite buse (1), la mesure du bruit environnant étant filtrée de la mesure des vibrations du corps (50) de la buse (1).

14. Procédé de détection selon la revendication 12 ou 13, dans laquelle une étape (400) consistant à amplifier le signal électrique s'intercale entre ladite étape (300) consistant à transformer la mesure des vibrations en signal électrique et ladite étape (500) consistant à transformer ledit signal électrique amplifié en signal différentiel, au moyen d'une carte (3) intégrée audit capteur de vibration (2).

15. Procédé de détection selon l'une des revendications 12 à 14, dans lequel le signal de référence est une valeur prédéterminée seuil pré-enregistrée dans ladite unité de calcul.

16. Procédé de détection selon l'une des revendications 12 à 14, dans lequel le signal de référence correspond à un signal seuil étalonné au démarrage de ladite au moins une buse (1) de pulvérisation.

17. Procédé de détection selon la revendication l'une des revendications 12 à 14, dans lequel la rampe de pulvérisation comporte une pluralité de buses (1) de pulvérisation et dans lequel le signal de référence correspond à une moyenne des signaux électriques, le cas échéant transformés en signaux différentiels, transportés des autres buses (1) de pulvérisation.

## Patentansprüche

1. Sprühsystem für ein landwirtschaftliches Sprühgerät, das einen Spritzbalken, der eine Hauptleitung (4) aufweist, und mindestens einen Düsenträger (5), der mit der Hauptleitung (4) verbunden ist, vorweist, wobei der Düsenträger (5) vorweist:
- einen Körper (50), der eine Einlassleitung für zu versprühendes Produkt aufnimmt, die konfiguriert ist, um durch die Hauptleitung (4) mit zu versprühendem Produkt gespeist zu werden;
- mindestens eine erste Sprühdüse (1) des Produkts, die mindestens eine Abgabeöffnung des Produkts vorweist, und konfiguriert ist, um durch die Produkteinlassleitung mit Produkt gespeist zu werden und das Produkt zu der Abgabeöffnung hin zu leiten;
- mindestens ein Vibrationssensor (2) und der in dem Körper (50) aufgenommen oder mit der Düse (1) verbunden ist;
wobei der Spritzbalken zum Versprühen des Produkts durch die erste Sprühdüse (1) konfiguriert ist;
wobei der Vibrationssensor (2) zum Messen der Vibrationen des Körpers (50) konfiguriert ist; und
wobei das Sprühsystem ferner eine Recheneinheit vorweist, die zum Vergleichen der Messung der Vibrationen des Körpers (50) oder der Düse (1) mit einem Referenzsignal zum Bestimmen des Verstopfungszustand der Düse (1) konfiguriert ist; **dadurch gekennzeichnet, dass** das Sprühsystem außerdem eine Vibrationsverstärkungsvorrichtung vorweist, die stromaufwärtig der Abgabeöffnung der Sprühdüse (1) gelegen ist, wobei die Verstärkungsvorrichtung zum Verstärken der Vibrationen des Körpers (50) oder der Düse (1) konfiguriert ist.

2. Sprühsystem nach Anspruch 1, wobei der Vibrationssensor (2) ein piezoelektrischer Sensor ist.

3. Sprühsystem nach einem der Ansprüche 1 bis 2, wobei der Vibrationssensor (2) in dem Körper (50) des Düsenträgers (5) in der Nähe der Abgabeöffnung der Düse (1) aufgenommen ist.

4. Sprühsystem nach einem der Ansprüche 1 bis 3, wobei der Vibrationssensor (2) ferner zum Umwandeln der Messung der Vibrationen in ein elektrisches Signal konfiguriert ist.

5. Sprühsystem nach Anspruch 4, wobei der Vibrationssensor (2) ferner zum Umwandeln des elektrischen Signals in ein Differenzsignal konfiguriert ist.

6. Sprühsystem nach Anspruch 5, wobei der Vibrationssensor (2) zum Senden des Differenzsignals zu der Recheneinheit hin konfiguriert ist, die zum Vergleichen des Differenzsignals mit einem vorbestimmten Schwellensignal konfiguriert ist.

7. Sprühsystem nach einem der Ansprüche 1 bis 6, wobei der Düsenträger (5) eine Vielzahl von Sprühdüsen (1) vorweist, wobei der Vibrationssensor (2) zum Messen der Vibrationen des Körpers (50) jeder der Düsen (1) und zum Bestimmen des Verstopfungszustand jeder der Düsen (1) konfiguriert ist.

8. Sprühsystem nach einem der Ansprüche 1 bis 6, wobei der Düsenträger (5) eine Vielzahl von Sprühdüsen (1) vorweist, wobei ein Vibrationssensor (2) mit jeder der Düsen (1) verbunden und zum Messen der Vibrationen jeder der Düsen und zum Bestimmen ihres Verstopfungszustands konfiguriert ist.

9. Sprühsystem nach einem der Ansprüche 1 bis 8, wobei die Verstärkungsvorrichtung Propeller vorweist, umfassend Blätter, die zum Rotieren in dem zu sprühenden Produkt, um den Strom des zu sprühenden Produkts, der die Düse (1) durchquert, zu verwirbeln, konfiguriert sind.

10. Sprühsystem nach einem der Ansprüche 1 bis 8, wobei die Verstärkungsvorrichtung Vorsprünge vorweist, die von den Wänden des Körpers (50) in Richtung des zu sprühenden Produkts, das diesen durchquert, vorstehen und zum Verwirbeln des Produkts konfiguriert sind.

11. Sprühsystem nach einem der Ansprüche 1 bis 10, das ferner einen zweiten Sensor, der zum Messen des Umgebungsgeräusches des Sprühsystems konfiguriert ist, vorweist, sodass die durch den Vibrationssensor (2) durchgeführte Messung mit der durch den zweiten Sensor durchgeführten Messung verglichen werden kann.

12. Detektionsverfahren der Verstopfung mindestens einer Düse (1) eines Sprühsystems nach einem der Ansprüche 1 bis 11, das mindestens die folgenden Schritte vorweist:
- einen Schritt (100), der darin besteht, zu versprühendes Produkt durch eine Öffnung der Düse (1) zu leiten;
- einen Schritt (200), der darin besteht, die Vibrationen des Körpers (50) der Düse (1) mittels eines Vibrationssensors (2) zu messen;
- einen Schritt (300), der darin besteht, die Messung der Vibrationen in ein elektrisches Signal umzuwandeln;
- einen optionalen Schritt (500), der darin besteht, das verstärkte elektrische Signal in ein Differenzsignal mittels einer in den Vibrationssensor (2) integrierten Karte (3) umzuwandeln;
- einen Schritt (600), der darin besteht, das elektrische Signal, gegebenenfalls in ein Differenzsignal umgewandelt, zu einer Recheneinheit des Sprühsystems hin zu übertragen;
- einen Schritt (700), der darin besteht, das übertragene elektrische Signal, gegebenenfalls in ein Differenzsignal umgewandelt, mit einem Referenzsignal zu vergleichen.

13. Detektionsverfahren nach Anspruch 12, umfassend einen Schritt (101) zum Messen des Umgebungsgeräusches, insbesondere vor dem Schritt (100), der darin besteht, zu sprühendes Produkt durch eine Öffnung der Düse (1) zu leiten, wobei die Messung des Umgebungsgeräusches aus der Messung der Vibrationen des Körpers (50) der Düse (1) herausgefiltert wird.

14. Detektionsverfahren nach Anspruch 12 oder 13, wobei ein Schritt (400), der darin besteht, das elektrische Signal zu verstärken, zwischen dem Schritt (300), der darin besteht, die Messung der Vibrationen in ein elektrisches Signal umzuwandeln, und dem Schritt (500), der darin besteht, das verstärkte elektrische Signal in ein Differenzsignal, mittels einer in den Vibrationssensor (2) integrierten Karte (3) umzuwandeln, eingeschoben ist.

15. Detektionsverfahren nach einem der Ansprüche 12 bis 14, wobei das Referenzsignal ein in der Recheneinheit vorab gespeicherter, vorbestimmter Schwellenwert ist.

16. Detektionsverfahren nach einem der Ansprüche 12 bis 14, wobei das Referenzsignal einem beim Start der mindestens einen Sprühdüse (1) kalibrierten Schwellenwertsignal entspricht.

17. Detektionsverfahren nach einem der Ansprüche 12 bis 14, wobei der Sprühbalken eine Vielzahl von Sprühdüsen (1) vorweist, und wobei das Referenzsignal einem Mittelwert der elektrischen Signale entspricht, gegebenenfalls in Differenzsignale umgewandelt, die von den anderen Sprühdüsen (1) übertragen werden.

## Claims

1. Spraying system for an agricultural sprayer, comprising a spray boom having a main duct (4) and at least one nozzle holder (5) connected to the main duct (4), the nozzle holder (5) comprising:
- a body (50) housing a spray product inlet duct configured to be supplied with spray product via said main duct (4);
- at least one first nozzle (1) for spraying said product, comprising at least one outlet orifice for said product and configured to be supplied with product via the product inlet duct and to convey said product towards said outlet orifice;
- at least one vibration sensor (2) housed in said body (50) or connected to said nozzle (1);
said spray boom being configured to spray product through said first spray nozzle (1);
said vibration sensor (2) being configured to measure the vibrations of the body (50);
and
said spraying system further comprising a computing unit configured to compare the measurement of the vibrations of the body (50) or nozzle (1) with a reference signal to determine the clog state of said nozzle (1);
**characterized in that** the spraying system further comprises a vibration amplification device located upstream of the spray nozzle (1) outlet orifice, said amplification device being configured to amplify the vibrations of the body (50) or nozzle (1).

2. Spraying system according to claim 1, wherein the vibration sensor (2) is a piezoelectric sensor.

3. Spraying system according to one of claims 1 to 2, wherein the vibration sensor (2) is housed in the body (50) of the nozzle holder (5), in the vicinity of the outlet orifice of said nozzle (1).

4. Spraying system according to any one of claims 1 to 3, wherein the vibration sensor (2) is further configured to transform the vibration measurement into an electrical signal.

5. Spraying system according to claim 4, wherein the vibration sensor (2) is further configured to transform the electrical signal into a differential signal.

6. Spraying system according to claim 5, wherein said vibration sensor (2) is configured to send the differential signal to the computing unit which is configured to compare said differential signal with a predetermined threshold signal.

7. Spraying system according to any one of claims 1 to 6, wherein the nozzle holder (5) comprises a plurality of spray nozzles (1), the vibration sensor (2) being configured to measure the vibrations of the body (50) of each of the nozzles (1) and to determine the clog state of each of the nozzles (1).

8. Spraying system according to any one of claims 1 to 6, wherein the nozzle holder (5) comprises a plurality of spray nozzles (1), a vibration sensor (2) being connected to each of the nozzles (1) and being configured to measure the vibrations of each of the nozzles and determine their clog state.

9. Spraying system according to any one of claims 1 to 8, wherein the amplification device comprises propellers comprising blades configured to rotate in the spray product, so as to disrupt the flow of spray product passing through the nozzle (1).

10. Spraying system according to any one of claims 1 to 8, wherein the amplification device comprises protuberances projecting from the walls of the body (50), in the direction of the spray product passing through it and configured to disrupt said product.

11. Spraying system according to one of claims 1 to 10, further comprising a second sensor configured to measure the ambient noise of the spraying system, so that the measurement made by the vibration sensor (2) can be compared with the measurement made by said second sensor.

12. Method for detecting the clogging of at least one nozzle (1) of a spraying system according to one of claims 1 to 11, comprising at least the following steps:
- a step (100) consisting in passing the spray product through an orifice of said nozzle (1);
- a step (200) consisting in measuring the vibrations of the nozzle (1) body (50) by means of a vibration sensor (2);
- a step (300) consisting in converting the vibration measurement into an electrical signal;
- an optional step (500) consisting in converting said amplified electrical signal into a differential signal, by means of a circuit board (3) integrated into said vibration sensor (2);
- a step (600) consisting in transporting said electrical signal, where applicable converted into a differential signal, to a computing unit of the spraying system;
- a step (700) consisting in comparing said transported electrical signal, where applicable converted into a differential signal, with a reference signal.

13. Detection method according to claim 12, comprising a step (101) of measuring the ambient noise, in particular prior to the step (100) consisting in passing the spray product through an orifice of said nozzle (1), the measurement of the ambient noise being filtered from the measurement of the vibrations of the body (50) of the nozzle (1).

14. Detection method according to claim 12 or 13, wherein a step (400) consisting in amplifying the electrical signal is interposed between said step (300) consisting in converting the vibration measurement into an electrical signal and said step (500) consisting in converting said amplified electrical signal into a differential signal, by means of a circuit board (3) integrated into said vibration sensor (2).

15. Detection method according to one of claims 12 to 14, wherein the reference signal is a predetermined threshold value pre-stored in said computing unit.

16. Detection method according to one of claims 12 to 14, wherein the reference signal corresponds to a threshold signal calibrated at the start-up of said at least one spray nozzle (1).

17. Detection method according to one of claims 12 to 14, wherein the spray boom comprises a plurality of spray nozzles (1) and wherein the reference signal corresponds to an average of the electrical signals, where applicable converted into differential signals, conveyed from the other spray nozzles (1).
